# EUROPEAN PATENT SPECIFICATION

(11) **EP 4 337 727 B1**
(45) Date of publication and mention of the grant of the patent: **09.12.2026**
(21) Application number: 21941367.1
(22) Date of filing: 14.05.2021
(51) Int. Cl.: C08L 83/04, C08L 83/05, C08L 83/07, C08L 83/08, C09D 5/00, C09J 7/38, C09J 7/40

(54) **FLUOROSILICONE RELEASE COATING COMPOSITION AND RELEASE LINER**
FLUORSILIKONTRENNSCHICHTZUSAMMENSETZUNG UND TRENNSCHICHT
COMPOSITION DE REVÊTEMENT ANTIADHÉSIF À BASE DE FLUOROSILICONE ET COUCHE DE PROTECTION ANTIADHÉSIVE

(43) Date of publication of application: 20.03.2024
(73) Proprietor: Dow Silicones Corporation, Midland, Michigan 48686 (US)
(72) Inventor: LU, Ruihua, Shanghai 201203 (CN); MA, Chao, Shanghai 201203 (CN); KONG, Lingxuan, Shanghai 201203 (CN); CAO, Qing, Shanghai 201203 (CN); HUANG, Fuming, Shanghai 201203 (CN); ZHOU, Yan, Shanghai 201203 (CN); LIU, Zhihua, Shanghai 201203 (CN)
(74) Representative: Murgitroyd & Company
(86) International application number: PCT/CN2021/093762
(87) International publication number: WO 2022/236796

(56) References cited:
- EP-A1- 0 529 840
- EP-A2- 0 370 689
- EP-A2- 0 455 384
- EP-A2- 0 608 780
- EP-A2- 0 850 999
- WO-A1-2008/019953
- WO-A1-2014/193654
- WO-A1-2016/032794
- CN-A- 105 593 270
- JP-A- 2020 100 763
- US-A- 5 118 776

## Description

### Technical Field

The present invention relates to a fluorosilicone release coating composition and a release liner using the same.

### Background Art

Silicone pressure-sensitive adhesives (Si-PSAs) are widely used in many applications such as electronics, industrial processing, packaging, protect films, and vehicles due to their good wetting, heat resistance, cold resistance, weather resistance, chemical resistance and electrical insulation. Si-PSAs are typically used in the form of one or two sides tapes, or Si-PSA films. In order to get easy release, fluorosilicone (F-Si) based release liners are generally used to form laminates with the tapes or the films. Thus F-Si based release liner can provide the Si-PSA with protection and easy debonding in use.

For example, Patent Document 1 discloses a curable silicone composition comprising: (A) an organopolysiloxane having alkenyl groups and perfluoroalkenyl-subsitituted organic groups; an organohydrogenpolysiloxane, and a catalyst for addition reaction, wherein the composition can form a cured coating which adheres firmly to various substrates and has good release properties, stability in the release properties, water- and oil-repellency, and solvent resistance.

Patent Document 2 discloses a silicone composition comprising: (A) an organopolysiloxane having at least two alkenyl groups and at least one perfluoropolyether-substituted alkyl groups per molecule, and having a fluorine content of from 20 to 40 % by weight; (B) an organohydrogenpolysiloxane having at least three silicon atom-bonded hydrogen atoms per molecule; (C) a straight-chain perfluoropolyether anti-forming agent; and (D) a platinum group metal catalyst, wherein the composition provides a cured coating which needs only a low release force and hardly gives reduction in the residual ashesive ratio.

Patent Document 3 discloses a solventless releaser composition for use with silicone pressure-sensitive adhesives, comprising: (A) an organopolysiloxane having at least two alkenyl groups and at least one perfluoropolyether-substituted alkyl group per molecule, and having a fluorine content of 30 to 50% by weight of the molecule and a viscosity of 100 to 2,000 mPa·s at 25 °C; (B) an organohydrogenpolysiloxane having at least three silicon atom-bonded hydrogen atoms per molecule; (C) a reaction regulator; and (D) a platinum group metal catalyst, wherein the composition is coated and cured to a substrate to from a release liner for use with Si-PSAs.

Patent Document 4 discloses a silicone release coating composition for Si-PSAs, comprising: (A) an organopolysiloxane having at least two alkenyl groups per molecule, and having a fluoroalkyl group and a fluoropolyether group; (B) an organohydrogenpolysiloxane having at least three silicon atom-bonded hydrogen atoms per molecule; and (C) a platinum group metal-type catalyst, wherein the composition can form a cured coating in which the release force can be controlled within a range of medium to heavy release force against Si-PSAs.

Patent Document 5 discloses a silicone release coating composition comprising: (A) a linear or branched organopolysiloxane having at least two alkenyl group-containing organic groups and at least one aryl group-containing organic group per molecule, and not having a fluorine-containing organic group; (B) a linear or branched organopolysiloxane having at least one alkenyl group-containing organic group and at least one fluorin-containing organic group per molecule; (C) an organohydrogenpolysiloxane having at least three silicone atom-bonded hydrogen atoms per molecule and not having a fluorine-containing organic group; (D) a platinum group metal-based catalyst; and (E) an organohydrogenpolysiloxane having at least one silicon atom-bonded hydrogen atom per molecule and having a fluorin-containing organic group, wherein the composition can form a release film with an extremely low release force with respect to Si-PSAs and excellent post-release resisual adhesive force.
Patent Document 6 discloses novel polyfluoroalkyl alkenes and silicone compounds prepared therefrom.
Patent Document 7 discloses novel iluoroaikyl silicones and use thereof as release materials.
Patent Documents 8 and 9 disclose fluorescent organopolysiloxane compounds which bear two or more reactive silicon-bonded sites useful as durable markers in curable silicone compositions. The resulting fluorescent curable compositions are useful in the preparation of adhesive-release coatings.
Patent Document 10 discloses a release coating composition comprising a polyorganosiloxane (A) having alkenyl groups, a crosslinking agent (B) having organohydrogensiloxane groups, a catalyst for the hydrosilylation reaction between (A) and (B), and an anchorage additive for enhancing the adhesion of the composition to a polymer film substrate. The anchorage additive is the reaction product of a fluid polyorganosiloxane (C) containing at least one alkenyl group and at least one silanol group with a hydrolysable silane (D) containing at least one epoxide group. The curable silicone release coating composition can be applied to a substrate known as a 'liner' retaining a label, which liner can for example be paper or a polymer film, and cured.
Patent Document 11 discloses addition-curable silicone pressure sensitive adhesives which can be covered with an addition-cured fluorosilicone release coating to provide a releasable laminate. The release force of the laminate is low to moderate and the subsequent adhesion and tack of the adhesive is high and all three values are stable with time. The laminate can be prepared by contacting the release coating with cured adhesive or by curing the adhesive in contact with the release coating.
Patent Document 12 discloses moisture-curable silicone pressure sensitive adhesives which can be covered with an addition-cured fluorosilicone release coating to provide a releasable laminate. The release force of the laminate is low to moderate and the subsequent adhesion and tack of the adhesive is high and all three values are stable with time. The laminate can be prepared by contacting the release coating, with solvent-free or solvent-containing adhesive.

In recent years, consumer electronics have become more and more popular like in smart phones, pads, and even foldable phones. These applications, in especial, foldable optical clear adheseive (OCA) applications require high performance Si-PSAs. The Si-PSA for the OCA is normally coated on the F-Si release liner to cure and thus form a film, and the other side of the film will be laminated on another layer of F-Si release liner and thus form a sandwich structure. Each F-Si release liners for the two sides requires enough of a low release force, e.g., less than 3.937 gf/cm (10 gf/inch) in one side and middle release force, e.g., less than 15.75 gf/cm (40 gf/inch) in another side. The OCA film is required to exhibit a high adhesion and a low glass transition temperature, and further is required to pass the hundreds of thousands of folding tests. These high requirements for Si-PSA lead to the high requirement for F-Si release liners and come to F-Si release coating composition.

However, the compositions mentioned above have a problem in forming a release liner that can be peeled with a low release force from Si-PSAs. That is, the current F-Si release coating couldn't provide enough low release performance in light side with dry lamination and tight side with wet coating. In particular, there is a problem in forming a release liner that can be peeled with sufficiently low release force from Si-PSA having a low glass transition temperature of 30°C or below used as OCA for dry lamination, at the same time, there is a problem in forming a release liner that can provide the middle release force in Si-PSA having a low glass transition temperature of 30°C or below used as OCA with direct coating.

### Prior Art Documents

### Patent Documents

Patent Document 1: U. S. Patent No. 5,204,436 A
Patent Document 2: U. S. Patent Application Publication No. 2004/0186225 A1
Patent Document 3: U. S. Patent Application Publication No. 2011/0251339 A1
Patent Document 4: Japanese Patent Application Publication No. 2017-165893 A
Patent Document 5: International Publication No. WO 2020/137835 A1
Patent Document 6: WO 2016/032794
Patent Document 7: WO 2014/193654 A1
Patent Document 8: EP 0 455 384 A2
Patent Document 9: US 5 118 776 A
Patent Document 10: WO 2008/019953 A1
Patent Document 11: EP 0 370 689 A2
Patent Document 12: EP 0 529 840 A1

### Summary of the Invention

### Technical Problems

An object of the present invention is to provide a fluorosilicone release coating composition capable of forming a release film having a stable and low release force with respect to a silicone pressure-sensitive adhesive having a low glass transition temperature, and to further provide a release film having a stable and low release force with respect to a silicone pressure-sensitive adhesive having a low glass transition temperature.

### Solution to Problem

The fluorosilicone release coating composition of the present invention comprises:
(A) a linear organopolysiloxane having at least two alkenyl groups and at least one fluoroalkyl group per molecule, and not having a silicon atom-bonded hydrogen atom; and constisting essentially of a M siloxane unit represented by the general formula: R¹₃SiO_{1/2} and a D siloxane unit represented by the general formula: R¹₂SiO_{2/2}, wherein R¹ are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms, providing that, in a molecule, at least two R¹ are the alkenyl groups and at least one R¹ is the fluoroalkyl group;
(B) a branched organopolysiloxane having at least one fluoroalkyl group per molecule, and not having a silicon atom-bonded hydrogen atom; consisting essentially of a M siloxane unit represented by the general formula: R²₃SiO_{1/2}, a D siloxane unit represented by the general formula: R²₂SiO_{2/2} and a Q siloxane unit represented by the formula: SiO_{4/2}, wherein R² are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms, providing that, in a molecule, at least one R² is the fluoroalkyl group;
(C) a linear organopolysiloxane having at least one fluoroalkyl group per molecule, and having neither an aliphatic unsaturated group nor a silicon atom-bonded hydrogen atom; consisting essentially of a M siloxane unit represented by the general formula: R³₃SiO_{1/2} and a D siloxane unit represented by the general formula: R³₂SiO_{2/2}, wherein R³ are the same or different, and are alkyl groups having from 1 to 12 carbon atoms, aryl groups having from 6 to 12 carbon atoms, aralkyl groups having from 7 to 12 carbon atoms, or fluoroalkyl groups having from 1 to 12 carbon atoms, providing that, in a molecule, at least one R³ is the fluoroalkyl group,
(D) an organohydrogenpolysiloxane having at least two silicon atom-bonded hydrogen atoms and at least one fluoroalkyl group per molecule; and
(E) a hydrosilylation reaction catalyst comprising platinum atoms within a range of from 0.1 to 1,000 ppm in mass units with respect to the present composition,
wherein a content of component (A) is in a range of from about 40 to about 90.5 mass%, a content of component (B) is in a range of from about 9 to about 56 mass%, and a content of component (C) is in a range of from about 0.5 to about 4 mass%, each based on a total mass of components (A) to (C); and a content of component (D) is in a range of from about 1 to about 15 parts by mass with respect to 100 parts by mass of a total mass of components (A) to (C).

In various embodiments, component (A) has the fluoroalkyl groups in an amount such that a content of fluorine atoms associated with the fluoroalkyl groups in a molecule is at least 30 mass%.

In various embodiments, component (B) has the fluoroalkyl groups in an amount such that a content of fluorine atoms associated with the fluoroalkyl groups in a molecule is at least 15 mass%.

In various embodiments, component (C) has the fluoroalkyl groups in an amount such that a content of fluorine atoms associated with the fluoroalkyl groups in a molecule is at least 20 mass%.

In various embodiments, the fluorosilicone release coating composition further comprises: (F) a hydrosilylation reaction inhibitor, in an amount of from about 0.01 to about 5 parts by mass with respect to 100 parts by mass of a total mass of components (A) to (C).

In various embodiments, the fluorosilicone release coating composition further comprises: (G) an arbitrary amount of a solvent.

In various embodiments, the fluorosilicone release coating composition is used for a silicone pressure sensitive adhesive.

The release liner of the present invention is obtained by coating a substrate with the fluorosilicone release coating composition described above.

In various embodiments, the substrate is a plastic film.

### Effects of the Invention

The fluorosilicone release coating composition of the present invention can be cured to form a release coating exhibiting a stable and low release force with respect to a silicone pressure-sensitive adhesive having a low glass transition temperature. In especial, the release liner of the present invention has a stable and low release force with respect to a silicone pressure-sensitive adhesive having a low glass transition temperature.

### Definitions

The terms "comprising" or "comprise" are used herein in their broadest sense to mean and encompass the notions of "including," "include," "consist(ing) essentially of," and "consist(ing) of." The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples. The term "about" as used herein serves to reasonably encompass or describe minor variations in numerical values measured by instrumental analysis or as a result of sample handling. Such minor variations may be in the order of ±0-25, ±0-10, ±0-5, or ±0-2.5, % of the numerical values. Further, the term "about" applies to both numerical values when associated with a range of values. Moreover, the term "about" may apply to numerical values even when not explicitly stated.

### Detailed Description of the Invention

### <Fluorosilicone Release Coating Composition>

First, the fluorosilicone release coating composition of the present invention will be described in detail.

### <Component (A)>

Component (A) is a linear organopolysiloxane having at least two alkenyl groups and at least one fluoroalkyl group per molecule, and not having a silicon atom-bonded hydrogen atom. Examples of the alkenyl groups include alkenyl groups having from 2 to 12 carbon atoms, such as vinyl, allyl, butenyl, pentenyl, hexenyl, heptenyl, octenyl, nonenyl, decenyl, undecenyl and dodecenyl, among these, vinyl groups are preferable. Examples of the fluoroalkyl groups include fluoroalkyl groups having from 1 to 12 carbon atoms, such as 3,3,3-trifluoropropyl groups, 3,3,4,4,4-pentafluorobutyl groups, 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, 3,3,4,4,5,5,6,6,7,7,8,8,8-tridecafluorooctyl groups, 3,3,4,4,5,5,6,6,7,7,8,8,9,9,9-pentadecafluorononyl groups, and so forth, among these, 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, and 3,3,4,4,5,5,6,6,7,7,8,8,8-tridecafluorooctyl groups are preferable. Examples of silicon atom-bonded groups other than the alkenyl groups and fluoroalkyl groups include alkyl groups having from 1 to 12 carbon atoms, such as methyl, ethyl, propyl, butyl and octyl; aryl groups having from 6 to 12 carbon atoms, such as phenyl, tolyl and xylyl; aralkyl groups having from 7 to 12 carbon atoms such as benzyl and phenethyl; among these, methyl groups are preferable. Note that the content of fluorine atoms associated with the fluoroalkyl groups in a molecule is preferably at least 30 mass%, alternatively at least 35 mass%, or alternatively at least 40 mass%. This is because when the content of fluorine atoms in component (A) is greater than or equal to the lower limit described above, a release coating obtained by crosslinking the present composition exhibits a good release force with respect to a silicone pressure-sensitive adhesive. Note that the upper limit of the content of fluorine atoms in component (A) is not particularly limited, however, when the content is too high, component (A) itself tends to not dissolve in the solvent, which diminishes the handleability, and the content therefore is preferably at most 60 mass%, alternatively at most 50 mass%. Note that a small amount of hydroxyl groups or alkoxy groups having from 1 to 3 carbon atoms may be bonded to the silicon atoms in component (A) within a range that does not diminish the object of the present invention.

Component (A) is preferably an organopolysiloxane consisting essentially of a M siloxane unit represented by the general formula: R¹₃SiO_{1/2} and a D siloxane unit represented by the general formula: R¹₂SiO_{2/2}.

In the formula, R¹ are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms, examples of which are the same as those described above. Note that, in a molecule, at least two R¹ are the alkenyl groups and at least one R¹ is the fluoroalkyl group.

The organopolysiloxane for component (A) may contain a small amount of other siloxane units such as a M siloxane unit represented by the general formula: (X)R¹₂SiO_{1/2} within a range that does not diminish the object of the present invention. In the formula, X is a hydroxyl group or an alkoxy group having from 1 to 3 carbon atoms.

### <Component (B)>

Component (B) is a branched organopolysiloxane having at least one fluoroalkyl group per molecule, and not having a silicon atom-bonded hydrogen atom. Examples of the fluoroalkyl groups include the same as those described above, and 3,3,3-trifluoropropyl groups are preferable. Examples of silicon atom-bonded groups other than the fluoroalkyl groups include alkyl groups having from 1 to 12 carbon atoms, alkeyl groups having from 2 to 12 carbon atoms, aryl groups having from 6 to 12 carbon atoms, and aralkyl groups having from 7 to 12 carbon atoms, examples of which are the same as those described above, and methyl groups and vinyl groups are preferable. Note that the content of fluorine atoms associated with the fluoroalkyl groups in a molecule is preferably at least 15 mass%, alternatively at least 20 mass%, or alternatively at least 25 mass%. This is because when the content of fluorine atoms in component (B) is greater than or equal to the lower limit described above, a release coating obtained by crosslinking the present composition exhibits a good release force with respect to a silicone pressure-sensitive adhesive. Note that the upper limit of the content of fluorine atoms in component (B) is not particularly limited, however, when the content is too high, component (B) itself tends to not dissolve in the solvent, which diminishes the handleability, and the content therefore is preferably at most 60 mass%, alternatively at most 50 mass%. Note that a small amount of hydroxyl groups or alkoxy groups may be bonded to the silicon atoms in component (B) within a range that does not diminish the object of the present invention.

Component (B) is preferably an organopolysiloxane consisting essentially of a M siloxane unit represented by the general formula: R²₃SiO_{1/2}, a D siloxane unit represented by the general formula: R²₂SiO_{2/2} and a Q siloxane unit represented by the formula: SiO_{4/2}.

In the formula, R² are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms, examples of which are the same as those described above. Note that, in a molecule, at least one R² is the fluoroalkyl group.

The organopolysiloxane for component (B) may contain a small amount of other siloxane units such as a M siloxane unit represented by the general formula: (X)R²₂SiO_{1/2}, a T siloxane unit represented by the general formula: R²SiO_{3/2} within a range that does not diminish the object of the present invention. In the formula, X is a hydroxyl group or an alkoxy group having from 1 to 3 carbon atoms.

A viscosity of component (B) at 25°C is not limited, but in various embodiments is in a range of from about 100 mPa·s to about 100,000 mPa·s, alternatively in the range of from about 200 mPa·s to about 50,000 mPa·s, alternatively in the range of from about 300 mPa·s to about 50,000 mPa·s. This is because when the viscosity of component (B) is greater than or equal to the lower limit of the range described above, the characteristics of the resulting release coating are sufficiently, while when the viscosity is less than or equal to the upper limit of the range described above, the resulting composition has a suitable viscosity in processing and handling. Note that in the present specification, viscosity is the value measured using a type B viscometer according to ASTM D 1084 at 23 ± 2 °C.

### <Component (C)>

Component (C) is a linear organopolysiloxane having at least one fluoroalkyl group per molecule, and having neither an aliphatic unsaturated group nor a silicon atom-bonded hydrogen atom. Examples of the fluoroalkyl groups include the same as those described above, and 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, and 3,3,4,4,5,5,6,6,7,7,8,8,8-tridecafluorooctyl groups are preferable. Examples of silicon atom-bonded groups other than the fluoroalkyl groups include alkyl groups having from 1 to 12 carbon atoms, aryl groups having from 6 to 12 carbon atoms, and aralkyl groups having from 7 to 12 carbon atoms, examples of which are the same as those described above, and methyl groups are preferable. Note that the content of fluorine atoms associated with the fluoroalkyl groups in a molecule is preferably at least 20 mass%, alternatively at least 25 mass%, or alternatively at least 30 mass%. This is because when the content of fluorine atoms in component (C) is greater than or equal to the lower limit described above, a release coating obtained by crosslinking the present composition exhibits a good release force with respect to a silicone pressure-sensitive adhesive. Note that the upper limit of the content of fluorine atoms in component (C) is not particularly limited, however, when the content is too high, component (C) itself tends to not dissolve in the solvent, which diminishes the handleability, and the content therefore is preferably at most 60 mass%, alternatively at most 50 mass%. Note that a small amount of hydroxyl groups or alkoxy groups having from 1 to 3 carbon atoms may be bonded to the silicon atoms in component (C) within a range that does not diminish the object of the present invention.

Component (C) is preferably an organopolysiloxane consisting essentially of a M siloxane unit represented by the general formula: R³₃SiO_{1/2} and a D siloxane unit represented by the general formula: R³₂SiO_{2/2}.

In the formula, R³ are the same or different, and are alkyl groups having from 1 to 12 carbon atoms, aryl groups having from 6 to 12 carbon atoms, aralkyl groups having from 7 to 12 carbon atoms, or fluoroalkyl groups having from 1 to 12 carbon atoms, examples of which are the same as those described above. Note that, in a molecule, at least one R³ is the fluoroalkyl group.

The organopolysiloxane for component (C) may contain small amount of other siloxane units such as a M siloxane unit represented by the general formula: (X)R³₂SiO_{1/2} within a range that does not diminish the object of the present invention. In the formula, X is a hydroxyl group or an alkoxy group having from 1 to 3 carbon atoms.

A viscosity of component (C) at 25°C is not limited, but in various embodiments is in a range of from about 1,000 mPa·s to about 100,000 mPa·s, alternatively in the range of from about 2,000 mPa·s to about 100,000 mPa·s, alternatively in the range of from about 3,000 mPa·s to about 100,000 mPa·s. This is because when the viscosity of component (C) is greater than or equal to the lower limit of the range described above, the characteristics of the resulting release coating are sufficiently, while when the viscosity is less than or equal to the upper limit of the range described above, the resulting composition has a suitable viscosity in processing and handling. Note that in the present specification, viscosity is the value measured using a type B viscometer according to ASTM D 1084 at 23 ± 2 °C.

A content of component (A) is in a range of from about 40 to about 90.5 mass%, a content of component (B) is in a range of from about 9 to about 56 mass%, and a content of component (C) is in a range of from about 0.5 to about 4 mass%, preferably the content of component (A) is in a range of from about 40 to about 85.5 mass%, the content of component (B) is in a range of from about 14 to about 56 mass%, and the content of component (C) is in a range of from about 0.5 to about 4 mass%, alternatively the content of component (A) is in a range of from about 40 to about 80.5 mass%, the content of component (B) is in a range of from about 19 to about 56 mass%, and the content of component (C) is in a range of from about 0.5 to about 4 mass%, each based on a total mass of components (A) to (C). This is because when the content of component (A) is greater than or equal to the lower limit of the range described above, the release force of the resulting release coating tends to be stable, while when the content is less than or equal to the upper limit of the range described above, comparativity of component (A) tends to be enhanced. On the other hand, when the content of component (B) is greater than or equal to the lower limit of the range described above, the release force of the resulting release coating tends to be good in wet coating and aged release force tends to be stable, while when the content is less than or equal to the upper limit of the range described above, comparativity of component (B) tends to be enhanced. On the other hand, when the content of component (C) is greater than or equal to the lower limit of the range described above, the release force of the resulting release coating tends to be reduced, while when the content is less than or equal to the upper limit of the range described above, the release force of the resulting release coating tends to be stable and aged release force also tends to be stable.

### <Component (D)>

Component (D) is an organohydrogenpolysiloxane having at least two silicon atom-bonded hydrogen atoms per molecule. Examples of groups bonded to silicon atoms in component (D) include alkyl groups having from 1 to 12 carbon atoms, aryl groups having from 6 to 12 carbon atoms, aralkyl groups having from 7 to 12 carbon atoms, and fluoroalkyl groups having from 1 to 12 carbon atoms, examples of which are the same as those described above, among these, methyl groups, 3,3,4,4,5,5,5-heptafluoropentyl groups, 3,3,4,4,5,5,6,6,6-nonafluorohexyl groups, 3,3,4,4,5,5,6,6,7,7,7-undecafluoroheptyl groups, and 3,3,4,4,5,5,6,6,7,7,8,8,8-tridecafluorooctyl groups are preferable. Note that the content of fluorine atoms associated with the fluoroalkyl groups in a molecule is not particularly limited but is preferably at least 20 mass%, at least 25 mass%, at least 30 mass%, or at least 35 mass%. This is because when the content of fluorine atoms in component (D) is greater than or equal to the lower limit described above, the compatibility with components (A) to (C) is enhanced, and a release coating obtained by crosslinking the present composition exhibits a good peeling force with respect to a silicone pressure-sensitive adhesive. Note that the upper limit of the content of fluorine atoms in component (D) is not particularly limited, however, when the content is too high, component (D) itself tends to not dissolve in the solvent, which diminishes the handleability, so the content is preferably at most 60 mass% or at most 50 mass%. Note that a small amount of hydroxyl groups or alkoxy groups having from 1 to 3 carbon atoms may be bonded to the silicon atoms in component (D) within a range that does not diminish the object of the present invention.

A molecular structure of component (D) is not limited. Examples thereof include a straight-chain structure, a branched-chain structure, a partially branched straight-chain structure, a resinous structure, and a cyclic structure, and a straight-chain structure or a partially branched straight-chain structure is preferable.

A content of component (D) is in a range of from about 1 to about 15 parts by mass, preferably in a range of from about 1 to about 13 parts by mass, alternatively in a range of from about 2 to about 15 parts by mass, alternatively in a range of from about 3 to about 15 parts by mass, alternatively in a range of from about 2 to about 13 parts by mass, alternatively in a range of from about 3 to about 13 parts by mass, with respect to 100 parts by mass of a total mass of components (A) to (C). This is because when the content of component (D) is greater than or equal to the lower limit of the range described above, the crosslinking of the present composition progresses sufficiently, while when the content is less than or equal to the upper limit of the range described above, the characteristics of the resulting release coating are stabilized.

### <Component (E)>

Component (E) is a hydrosilylation reaction catalyst for promoting the curing of the present composition. Examples thereof include platinum-based catalysts, rhodium-based catalysts, and palladium-based catalysts, and platinum-based catalysts are preferable. Examples of the platinum-based catalyst include platinum fine powder, platinum black, platinum supporting silica fine powder, platinum supporting activated carbon, chloroplatinic acid, alcohol solutions of chloroplatinic acid, olefin complexes of platinum, and alkenylsiloxane complexes of platinum.

A content of component (E) is an effective amount that promotes the curing of the present composition and is specifically an amount in which the platinum atoms in the catalyst are within a range of from about 0.1 to 1,000 ppm in mass units with respect to the present composition. This is because when the content of component (E) is greater than or equal to the lower limit of the range described above, the curing of the resulting composition progresses, while when the content is less than or equal to the upper limit of the range described above, the resulting cured product becomes less susceptible to discoloration.

### <Component (F)>

The present composition may also comprise (F) a hydrosilylation reaction inhibitor in order to control the crosslinking reactions thereof. Examples of component (F) include: alkyne alcohols such as 1-ethynylcyclohexan-1-ol, 2-methyl-3-butyn-2-ol, 3,5-dimethyl-1-hexyn-3-ol, and 2-phenyl-3-butyn-2-ol; enyne compounds such as 3-methyl-3-penten-1-yne and 3,5-dimethyl-3-hexen-1-yne; methyl alkenyl siloxane oligomers such as 1,3,5,7-tetramethyl-1,3,5,7-tetravinylcyclotetrasiloxane and 1,3,5,7-tetramethyl-1,3,5,7-tetrahexenylcyclotetrasiloxane; alkynoxysilanes such as dimethyl bis(3-methyl-1-butyn-3-oxy)silane and methylvinyl bis(3-methyl-1-butyn-3-oxy)silane; alkyneoxysilane compounds such as methyl tris(1-methyl-1-phenyl-propyneoxy)silane, dimethyl bis(1-methyl-1-phenyl-propyneoxy)silane, methyl tris(1,1-dimethyl-propyneoxy)silane, dimethyl bis(1,1-dimethyl-propyneoxy)silane; triazoles, phosphines, mercaptans, hydrazines, sulphoxides, phosphates, nitriles, hydroperoxides, amines, ethylenically unsaturated isocyanates, fumarates (e.g., dialkyl fumarates, dialkenyl fumarates, and/or dialkoxyalkyl fumarates), maleates (e.g., diallyl maleates), alkenes, and combinations thereof.

A content of component (F) is not limited, and from the perspective of imparting sufficient pot-life to the present composition, the content is preferably in a range of from about 0.01 to about 5 parts by mass, alternatively in a range of from about 0.05 to about 5 parts by mass, or alternatively in a range of from about 0.05 to about 3 parts by mass, with respect to 100 parts by mass of a total mass of components (A) to (C). This is because when the content of component (F) is greater than or equal to the lower limit of the range described above, the pot-life of the present composition is sufficiently for use, while when the content is less than or equal to the upper limit of the range described above, the curability of the present composition is good for use.

### <Component (G)>

In addition, the present composition may comprise (G) a solvent in order to reduce the viscosity thereof and to improve the application workability or wettability. Examples of component (G) include: hydrocarbon-based solvents such as aromatic hydrocarbon-based solvents such as toluene and xylene, aliphatic hydrocarbon-based solvents such as hexane, heptane, octane, isooctane, decane, cyclohexane, methylcyclohexane, and isoparaffin, industrial gasoline (rubber solvents), petroleum benzene, and solvent naphtha; ketone-based solvents such as acetone, methyl ethyl ketone, 2-pentanone, 3-pentanone, 2-hexanone, 2-heptanone, 4-heptanone, methyl isobutyl ketone, diisobutyl ketone, acetonyl acetone, and cyclohexanone; ester-based solvents such as ethyl acetate, propyl acetate, isopropyl acetate, butyl acetate, and isobutyl acetate; ether-based solvents such as diethyl ether, dipropyl ether, diisopropyl ether, dibutyl ether, 1,2-dimethoxyethane, and 1,4-dioxane; solvents having ester and ether components such as 2-methoxyethylacetate, 2-ethoxyethylacetate, propylene glycol monoether acetate, and 2-butoxyethylacetate; siloxane-based solvents such as hexamethyl disiloxane, octamethyl trisiloxane, octamethyl cyclotetrasiloxane, decamethyl cyclopentasiloxane, tris(trimethylsiloxy)methylsilane, and tetrakis(trimethylsiloxy)silane; fluorine-based solvents such as trifluorotoluene, hexafluoroxylene, methyl nonafluorobutyl ether, and ethyl nonafluorobutyl ether; and mixed solvents of two or more types thereof.

A content of component (G) is arbitrary and may be adjusted appropriately as necessary, but the content is typically not greater than aout 2,000 parts by mass with respect to 100 parts by mass of a total mass of components (A) to (C).

The present composition may comprise an antioxidant, a reactive diluent, a leveling agent, a filler, an antistatic agent, an antifoaming agent or a pigment, within a range that does not impair the object of the present invention.

### <Release Liner>

Next, the release liner of the present invention will be described in detail.

The release liner can be produced by applying the present composition to a substrate and curing the composition.

Examples of the substrate may include a paper, a plastic film, a glass, and a metal film. Examples of paper include high-quality paper, coated paper, art paper, glassine paper, polyethylene laminate paper, and craft paper. Examples of plastic films include polyethylene films, polypropylene films, polyester films, polyimide films, polyvinyl chloride films, polyvinylidene chloride films, polyvinyl alcohol films, polycarbonate films, polytetrafluoroethylene films, polystyrene films, ethylene-vinyl acetate copolymer films, ethylene-vinyl alcohol copolymer films, triacetyl cellulose films, polyether ether ketone films, and polyphenylene sulfide films. The glass is not particularly limited in terms of thickness, type, and may be subjected to chemical reinforcement treatment. In addition, glass fibers may also be applied, and glass fibers may be used alone or in combination with another resin. Examples of metals include aluminum foil, copper foil, gold foil, silver foil, and nickel foil. When used as a release film, a polyester film is preferable.

A method of applying the present composition to a substrate is not limited, and a known coating method may be used. Examples of the coating method include a wire bar, a comma coater, a lip cpater, a roll coater, a die coater, a knife coater, a blade coater, a rod coater, a kiss coater, a gravure coater, screen coating, immersion coating, and cast coating.

An amount of the present composition applied to the substrate is also not limited and is preferably within a range of from about 0.1 to about 2 g/m² or within a range of from about 0.2 to about 1.8 g/m² in terms of solid content. Curing conditions are also not limited, however, the composition is preferably heated for about 10 to about 180 seconds or about 15 to about 150 seconds within a range of from about 80 to about 180 °C or within a range of from about 90 to about 160 °C.

A silicone pressure-sensitive adhesive may be applied to the release liner produced in this way. A commercially available composition may be used as the silicone pressure-sensitive adhesive composition.

A method of applying the silicone pressure-sensitive adhesive composition may be a known coating method, examples of which include a comma coater, a lip coater, a roll coater, a die coater, a knife coater, a blade coater, a rod coater, a kiss coater, a gravure coater, screen coating, immersion coating, and cast coating.

An amount of the silicone pressure-sensitive adhesive that is applied may be an amount such that a thickness after curing is from about 0.1 to about 300 µm and is preferably an amount such that a thickness after curing is from about 0.5 to about 200 µm. In addition, in a measurement of the peeling force described above, curing conditions of the silicone pressure-sensitive adhesive composition may be from about 10 seconds to about 10 minutes at about 80 to about 150 °C.

### Examples

The fluorosilicone release coating composition and the release liner of the present invention will be described in further detail hereinafter using Practical and Comparative Examples. Note that in the formulas, Me, Vi, P^{f1}, and P^{f2} are respectively a methyl group, a vinyl group, a 3,3,4,4,5,5,6,6,6-nonafluorohexyl group, and a 3,3,3-trifluoroproplyl group. Viscosity of the organopolysiloxane was measured as follows.

### <Viscosity>

Viscosity at 23 ± 2 °C was measured by using a type B viscometer (Brookfield HA or HB Type Rotational Viscometer with using Spindle #52 at 5 rpm) according to ASTM D 1084 "Standard Test Methods for Viscosity of Adhesive."

### <Practical Example 1 and Comparative Examples 1-3>

Fluorosilicone release coating composition shown in Table 1 were prepared using the components mentioned below. Firstly, components (A), (B), (C) and (F) were mixed homogeneously, and a suitable solvent, e.g., isopropyl ether, heptane, fluorinated solvent, or a mixture thereof as component (G) was loaded to adjust a non-volatile content. Next, components (D) and (E) were added to produce fluorosilicone release coating compositions. Note each non-volatile content of the fluorosilicone release coating compositions was adjusted to 9 mass%. The compositions were coated on PET substrates by a coater, and then cured under 140 °C for 30 seconds. The performances of the compositions were also shown in Table 2.

The following components were used as component (A).
component (a-1): a mixture of an organopolysiloxane composed of Me₂SiO_{2/2}, M eR^{f1}SiO_{2/2}, ViMeSiO_{2/2} and ViMe₂SiO_{1/2} unites, and having a vinyl group conte nt of 0.16 mass% and a fluoro atom content of 42.1 mass%
component (a-2): an organopolysiloxane composed of Me₂SiO_{2/2}, MeR^{f1}SiO_{2/2}, V iMeSiO_{2/2} and Me₃SiO_{1/2} unites, and having a vinyl group content of 0.20 mass % and a fluoro atom content of 41.9 mass%

The following component was used as component (B).
component (b-1): an organopolysiloxane composed of SiO_{4/2}, Me₂SiO_{2/2}, MeR^{f2}S iO_{2/2}, Me₃SiO_{1/2}, and ViMe₂SiO_{1/2} units, and having a viscosity of about 500 m Pa · s, a vinyl group content of 0.44 mass%, a fluoro atom content of 26 mass%

The following component was used as component (C).
component (c-1): an organopolysiloxane composed of Me₂SiO_{2/2}, MeR^{f1}SiO_{2/2}. an d Me₃SiO_{1/2}, and having a viscosity of 66,000 mPa·s and a fluoro atom content o f 32.4 mass%

The following component was used as component (D).
component (d-1): an oragnohydrogenpolysiloxane composed of MeHSiO_{2/2}, MeR^{f1}SiO_{2/2}. and Me₃SiO_{1/2}, and having a viscosity of 66,000 mPa·s, a fluoro atom content of 38 mass% and silicon atom-bonded hydrogen atom content of 0.50 mass%

The following component was used as component (E).
component (e-1): 1.5 mass% of Pt-1,3-divinyl-1,1,3,3-tetramethyldisiloxane complex in dimethyvinylsiloxy-terminated dimethylpolysiloxane having a viscosity of 450 mPa·s

The following components were used as component (F).
component (f-1): 3-methyl-1-butyn-2-ol
component (f-2): diallyl maleate

**<Table 1>**

| | | | Prac. Exam. 1 | Comp. Exam. 1 | Comp. E xam. 2 | Comp. Exam. 3 |
|---|---|---|---|---|---|---|
| Fluorosilicone Release Coating Composition (parts by mass) | (A) | (a-1) | 45.1 | 0 | 85.0 | 84.2 |
| | | (a-2) | 0 | 80.0 | 0 | 0 |
| | (B) | (b-1) | 45.9 | 0 | 0 | 0 |
| | (C) | (c-1) | 1.0 | 0 | 0 | 1.0 |
| | (D) | (d-1) | 7.3 | 3.2 | 3.9 | 3.9 |
| | (E) | (e-1) | 4.0 | 0.4 | 6.0 | 6.0 |
| | (F) | (f-1) | 0.1 | 0 | 0.3 | 0.3 |
| | | (f-2) | 0.1 | 0.2 | 0 | 0 |

### <Si-PSAs>

The following silicone presure-sensitive adhesives were used to evaluate the fluorosilicone release coating compositions of Practical and Comparative Examples.
Si-PSA 1: a silicone pressure-sensitive adheseive having a glass transition temperature of -11 °C.
Si-PSA 2: a silicone pressure-sensitive adheseive having a glass transition temperature of -18 °C.
Si-PSA 3: a silicone pressure-sensitive adheseive having a glass transition temperature of 30 °C.

### <Measurement of release force (a)>

Dry laminate: laminate cured Si-PSA1 or Si-PSA2 tapes on coated release coating, load weight of 20 g/cm² on laminated sample and left under room temperature (RT) or 70 °C for 20 hrs. or 3 days. After 20 hrs. or 3 days, remove the load and wait for 30 mins. Then test the release force with liner side by Chemlnstruments AR-1500. Refer to FINAT Test Method No.10 (FINAT Technical Handbook 7th edition, 2005).

### <Measurement of release force (b)>

Wet coating: the Si-PSA was directly coating on coated release liner and cured and laminate a blank PET on PSA surface and then cut with 1 inch width. Load weight of 20 g/cm² on laminated sample and left under RT or 70 °C for 20 hrs. or 3 days. After 20 hrs. or 3 days, remove the load and wait for 30 mins. Then test the release force with liner side by Chemlnstruments AR-1500. Refer to FINAT Test Method No.10 (FINAT Technical Handbook 7th edition, 2005).

**<Table 2>**

| Fluorosilicone Release Coating Composition | Prac. Exam. 1 | | | Comp. Exam. 1 | | Comp. Exam. 2 | | Comp. Exam. 3 |
|---|---|---|---|---|---|---|---|---|
| Type of Si-PAS | 1 | 2 | 3 | 1 | 3 | 1 | 3 | 2 |
| Release force (a) at RT | 8 | 7.7 | 1 | 35.1 | 2.1 | 24.8 | 1.9 | 11.0 |
| (gf/inch) | | | | | | | | |
| Release force (a) at 70°C | 9 | 9.3 | 1.1 | 57.8 | 3.8 | 22.2 | 1.8 | 10.2 |
| (gf/inch) | | | | | | | | |
| Release force (b) at RT | 26 | 41.2 | 7.2 | 696.0 | 28.4 | >400 | 12.8 | 78.3 |
| (gf/inch) | | | | | | | | |
| Release force (b) at 70°C | 27 | 40.2 | 11.4 | 691.5 | 35.1 | 447.1 | 19.8 | 58.6 |
| (gf/inch) | | | | | | | | |

### Industrial Applicability

The fluorosilicone release coating composition of the present invention can form a release coating exhibiting a low release force with respect to Si-PSAs having a low glass transition temperature, so the composition is effective as F-Si release coating composition for producing a release liner for Si-PSAs for the OCA protection.

## Claims

1. A fluorosilicone release coating composition comprising:
(A) a linear organopolysiloxane having at least two alkenyl groups and at least one fluoroalkyl group per molecule, and not having a silicon atom-bonded hydrogen atom; and constisting essentially of a M siloxane unit represented by the general formula: R¹₃SiO_{1/2} and a D siloxane unit represented by the general formula: R¹₂SiO_{2/2}, wherein R¹ are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms, providing that, in a molecule, at least two R¹ are the alkenyl groups and at least one R¹ is the fluoroalkyl group;
(B) a branched organopolysiloxane having at least one fluoroalkyl group per molecule, and not having a silicon atom-bonded hydrogen atom; consisting essentially of a M siloxane unit represented by the general formula: R²₃SiO_{1/2}, a D siloxane unit represented by the general formula: R²₂SiO_{2/2} and a Q siloxane unit represented by the formula: SiO_{4/2}, wherein R² are the same or different, and are alkyl groups having from 1 to 12 carbon atoms, alkenyl groups having from 2 to 12 carbon atoms, aryl groups having from 6 to 12 carbon atoms, aralkyl groups having from 7 to 12 carbon atoms, or fluoroalkyl groups having from 1 to 12 carbon atoms, providing that, in a molecule, at least one R² is the fluoroalkyl group;
(C) a linear organopolysiloxane having at least one fluoroalkyl group per molecule, and having neither an aliphatic unsaturated group nor a silicon atom-bonded hydrogen atom; consisting essentially of a M siloxane unit represented by the general formula: R³₃SiO_{1/2} and a D siloxane unit represented by the general formula: R³₂SiO_{2/2}, wherein R³ are the same or different, and are alkyl groups having from 1 to 12 carbon atoms, aryl groups having from 6 to 12 carbon atoms, aralkyl groups having from 7 to 12 carbon atoms, or fluoroalkyl groups having from 1 to 12 carbon atoms, providing that, in a molecule, at least one R³ is the fluoroalkyl group,
(D) an organohydrogenpolysiloxane having at least two silicon atom-bonded hydrogen atoms and at least one fluoroalkyl group per molecule; and
(E) a hydrosilylation reaction catalyst comprising platinum atoms within a range of from 0.1 to 1,000 ppm in mass units with respect to the present composition,
wherein a content of component (A) is in a range of from about 40 to about 90.5 mass%, a content of component (B) is in a range of from about 9 to about 56 mass%, and a content of component (C) is in a range of from about 0.5 to about 4 mass%, each based on a total mass of components (A) to (C); and a content of component (D) is in a range of from about 1 to about 15 parts by mass with respect to 100 parts by mass of a total mass of components (A) to (C).

2. The fluorosilicone release coating composition according to claim 1, wherein component (A) has the fluoroalkyl groups in an amount such that a content of fluorine atoms associated with the fluoroalkyl groups in a molecule is at least 30 mass%.

3. The fluorosilicone release coating composition according to claim 1, wherein component (B) has the fluoroalkyl groups in an amount such that a content of fluorine atoms associated with the fluoroalkyl groups in a molecule is at least 15 mass%.

4. The fluorosilicone release coating composition according to claim 1, wherein component (C) has the fluoroalkyl groups in an amount such that a content of fluorine atoms associated with the fluoroalkyl groups in a molecule is at least 20 mass%.

5. The fluorosilicone release coating composition according to claim 1, further comprising: (F) a hydrosilylation reaction inhibitor, in an amount of from about 0.01 to about 5 parts by mass with respect to 100 parts by mass of a total mass of components (A) to (C).

6. The fluorosilicone release coating composition according to claim 1, further comprising: (G) an arbitrary amount of a solvent.

7. The fluorosilicone release coating composition according to claim 1 used for a silicone pressure sensitive adhesive.

8. A release liner obtained by coating a substrate with the fluorosilicone release coating composition according to any one of claims 1 to 6.

9. The release liner according to claim 8, wherein the substrate is a plastic film.

## Patentansprüche

1. Fluorsilicontrennbeschichtungszusammensetzung, umfassend:
(A) ein lineares Organopolysiloxan, das mindestens zwei Alkenylgruppen und mindestens eine Fluoralkylgruppe pro Molekül aufweist und kein siliciumatomgebundenes Wasserstoffatom aufweist; und im Wesentlichen besteht aus einer M-Siloxaneinheit, dargestellt durch die allgemeine Formel: R¹₃SiO_{1/2}, und einer D-Siloxaneinheit, dargestellt durch die allgemeine Formel: R¹₂SiO_{2/2}, wobei R¹ gleich oder verschieden sind und Alkylgruppen, die 1 bis 12 Kohlenstoffatome aufweisen, Alkenylgruppen, die 2 bis 12 Kohlenstoffatome aufweisen, Arylgruppen, die 6 bis 12 Kohlenstoffatome aufweisen, Aralkylgruppen, die 7 bis 12 Kohlenstoffatome aufweisen, oder Fluoralkylgruppen, die 1 bis 12 Kohlenstoffatome aufweisen, sind, mit der Maßgabe, dass in einem Molekül mindestens zwei R¹ die Alkenylgruppen sind und mindestens ein R¹ die Fluoralkylgruppe ist;
(B) ein verzweigtes Organopolysiloxan, das mindestens eine Fluoralkylgruppe pro Molekül aufweist und kein siliciumatomgebundenes Wasserstoffatom aufweist; das im Wesentlichen besteht aus einer M-Siloxaneinheit, dargestellt durch die allgemeine Formel: R²₃SiO_{1/2}, einer D-Siloxaneinheit, dargestellt durch die allgemeine Formel: R²₂SiO_{2/2}, und einer Q-Siloxaneinheit, dargestellt durch die Formel: SiO_{4/2}, wobei R² gleich oder verschieden sind und Alkylgruppen, die 1 bis 12 Kohlenstoffatome aufweisen, Alkenylgruppen, die 2 bis 12 Kohlenstoffatome aufweisen, Arylgruppen, die 6 bis 12 Kohlenstoffatome aufweisen, Aralkylgruppen, die 7 bis 12 Kohlenstoffatome aufweisen, oder Fluoralkylgruppen, die 1 bis 12 Kohlenstoffatome aufweisen, sind, mit der Maßgabe, dass in einem Molekül mindestens ein R² die Fluoralkylgruppe ist;
(C) ein lineares Organopolysiloxan, das mindestens eine Fluoralkylgruppe pro Molekül aufweist und weder eine aliphatische ungesättigte Gruppe noch ein siliciumatomgebundenes Wasserstoffatom aufweist; das im Wesentlichen besteht aus einer M-Siloxaneinheit, dargestellt durch die allgemeine Formel: R³₃SiO_{1/2}, und einer D-Siloxaneinheit, dargestellt durch die allgemeine Formel: R³₂SiO_{2/2}, wobei R³ gleich oder verschieden sind und Alkylgruppen, die 1 bis
12. Kohlenstoffatome aufweisen, Arylgruppen, die 6 bis 12 Kohlenstoffatome aufweisen, Aralkylgruppen, die 7 bis 12 Kohlenstoffatome aufweisen, oder Fluoralkylgruppen, die 1 bis 12 Kohlenstoffatome aufweisen, sind, mit der Maßgabe, dass in einem Molekül mindestens ein R³ die Fluoralkylgruppe ist,
(D) ein Organohydrogenpolysiloxan, das mindestens zwei siliciumatomgebundene Wasserstoffatome und mindestens eine Fluoralkylgruppe pro Molekül aufweist; und
(E) einen Hydrosilylierungsreaktionskatalysator, umfassend Platinatome innerhalb eines Bereichs von 0,1 bis 1.000 ppm in Masseneinheiten in Bezug auf die vorliegende Zusammensetzung,
wobei ein Gehalt an Komponente (A) in einem Bereich von etwa 40 bis etwa 90,5 Massen-% liegt, ein Gehalt an Komponente (B) in einem Bereich von etwa 9 bis etwa 56 Massen-% liegt und ein Gehalt an Komponente (C) in einem Bereich von etwa 0,5 bis etwa 4 Massen-% liegt, jeweils basierend auf einer Gesamtmasse von Komponenten (A) bis (C); und ein Gehalt an Komponente (D) in einem Bereich von etwa 1 bis etwa 15 Massenteilen in Bezug auf 100 Massenteile einer Gesamtmasse von Komponenten (A) bis (C) liegt.

2. Fluorsilicontrennbeschichtungszusammensetzung nach Anspruch 1, wobei Komponente (A) die Fluoralkylgruppen in einer derartigen Menge aufweist, dass ein Gehalt an Fluoratomen, die mit den Fluoralkylgruppen in einem Molekül verbunden sind, mindestens 30 Massen-% beträgt.

3. Fluorsilicontrennbeschichtungszusammensetzung nach Anspruch 1, wobei Komponente (B) die Fluoralkylgruppen in einer derartigen Menge aufweist, dass ein Gehalt an Fluoratomen, die mit den Fluoralkylgruppen in einem Molekül verbunden sind, mindestens 15 Massen-% beträgt.

4. Fluorsilicontrennbeschichtungszusammensetzung nach Anspruch 1, wobei Komponente (C) die Fluoralkylgruppen in einer derartigen Menge aufweist, dass ein Gehalt an Fluoratomen, die mit den Fluoralkylgruppen in einem Molekül verbunden sind, mindestens 20 Massen-% beträgt.

5. Fluorsilicontrennbeschichtungszusammensetzung nach Anspruch 1, ferner umfassend: (F) einen Hydrosilylierungsreaktionsinhibitor in einer Menge von etwa 0,01 bis etwa 5 Massenteilen in Bezug auf 100 Massenteile einer Gesamtmasse von Komponenten (A) bis (C).

6. Fluorsilicontrennbeschichtungszusammensetzung nach Anspruch 1, ferner umfassend: (G) eine beliebige Menge eines Lösungsmittels.

7. Fluorsilicontrennbeschichtungszusammensetzung nach Anspruch 1, die für einen Siliconhaftklebstoff verwendet wird.

8. Trennlage, die durch Beschichten eines Substrats mit der Fluorsilicontrennbeschichtungszusammensetzung nach einem der Ansprüche 1 bis 6 erhalten wird.

9. Trennlage nach Anspruch 8, wobei das Substrat eine Kunststofffolie ist.

## Revendications

1. Composition de revêtement antiadhésif de fluorosilicone comprenant :
(A) un organopolysiloxane linéaire ayant au moins deux groupes alcényle et au moins un groupe fluoroalkyle par molécule, et n'ayant pas d'atome d'hydrogène lié à un atome de silicium ; et consistant essentiellement en un motif siloxane M représenté par la formule générale : R¹₃SiO_{1/2} et un motif siloxane D représenté par la formule générale : R¹₂SiO_{2/2}, dans laquelle les R¹ sont identiques ou différents, et sont des groupes alkyle ayant de 1 à 12 atomes de carbone, des groupes alcényle ayant de 2 à 12 atomes de carbone, des groupes aryle ayant de 6 à 12 atomes de carbone, des groupes aralkyle ayant de 7 à 12 atomes de carbone, ou des groupes fluoroalkyle ayant de 1 à 12 atomes de carbone, à condition que, dans une molécule, au moins deux R¹ soient les groupes alcényle et au moins un R¹ soit le groupe fluoroalkyle ;
(B) un organopolysiloxane ramifié ayant au moins un groupe fluoroalkyle par molécule, et n'ayant pas d'atome d'hydrogène lié à un atome de silicium ; constitué essentiellement d'un motif siloxane M représenté par la formule générale : R²₃SiO_{1/2}, un motif siloxane D représenté par la formule générale : R²₂SiO_{2/2} et un motif siloxane Q représenté par la formule : SiO_{4/2}, dans laquelle les R² sont identiques ou différents, et sont des groupes alkyle ayant de 1 à 12 atomes de carbone, des groupes alcényle ayant de 2 à 12 atomes de carbone, des groupes aryle ayant de 6 à 12 atomes de carbone, des groupes aralkyle ayant de 7 à 12 atomes de carbone, ou des groupes fluoroalkyle ayant de 1 à 12 atomes de carbone, à condition que, dans une molécule, au moins un R² soit le groupe fluoroalkyle ;
(C) un organopolysiloxane linéaire ayant au moins un groupe fluoroalkyle par molécule, et n'ayant ni groupe aliphatique insaturé, ni atome d'hydrogène lié à un atome de silicium ; constitué essentiellement d'un motif siloxane M représenté par la formule générale : R³₃SiO_{1/2} et un motif siloxane D représenté par la formule générale : R³₂SiO_{2/2}, dans laquelle les R³ sont identiques ou différents, et sont des groupes alkyle ayant de 1 à 12 atomes de carbone, des groupes aryle ayant de 6 à 12 atomes de carbone, des groupes aralkyle ayant de 7 à 12 atomes de carbone, ou des groupes fluoroalkyle ayant de 1 à 12 atomes de carbone, à condition que, dans une molécule, au moins un R³ soit le groupe fluoroalkyle,
(D) un organohydrogénopolysiloxane ayant au moins deux atomes d'hydrogène liés à un atome de silicium et au moins un groupe fluoroalkyle par molécule ; et
(E) un catalyseur de réaction d'hydrosilylation comprenant des atomes de platine dans une plage allant de 0,1 à 1 000 ppm en unités de masse par rapport à la présente composition,
dans laquelle une teneur en composant (A) est comprise dans une plage allant d'environ 40 à environ 90,5 % en masse, une teneur en composant (B) est comprise dans une plage allant d'environ 9 à environ 56 % en masse, et une teneur en composant (C) est comprise dans une plage allant d'environ 0,5 à environ 4 % en masse, chacune sur la base d'une masse totale des composants (A) à (C) ; et une teneur en composant (D) est comprise dans une plage allant d'environ 1 à environ 15 parties en masse par rapport à 100 parties en masse d'une masse totale de composants (A) à (C).

2. Composition de revêtement antiadhésif de fluorosilicone selon la revendication 1, dans laquelle le composant (A) a les groupes fluoroalkyle en une quantité telle qu'une teneur en atomes de fluor associés aux groupes fluoroalkyle dans une molécule est d'au moins 30 % en masse.

3. Composition de revêtement antiadhésif de fluorosilicone selon la revendication 1, dans laquelle le composant (B) a les groupes fluoroalkyle en une quantité telle qu'une teneur en atomes de fluor associés aux groupes fluoroalkyle dans une molécule est d'au moins 15 % en masse.

4. Composition de revêtement antiadhésif de fluorosilicone selon la revendication 1, dans laquelle le composant (C) a les groupes fluoroalkyle en une quantité telle qu'une teneur en atomes de fluor associés aux groupes fluoroalkyle dans une molécule est d'au moins 20 % en masse.

5. Composition de revêtement antiadhésif de fluorosilicone selon la revendication 1, comprenant en outre : (F) un inhibiteur de réaction d'hydrosilylation, en une quantité allant d'environ 0,01 à environ 5 parties en masse par rapport à 100 parties en masse d'une masse totale de composants (A) à (C).

6. Composition de revêtement antiadhésif de fluorosilicone selon la revendication 1, comprenant en outre : (G) une quantité arbitraire d'un solvant.

7. Composition de revêtement antiadhésif de fluorosilicone selon la revendication 1 utilisée pour un adhésif de silicone sensible à la pression.

8. Doublure antiadhésive obtenue par revêtement d'un substrat avec la composition de revêtement antiadhésif de fluorosilicone selon l'une quelconque des revendications 1 à 6.

9. Doublure antiadhésive selon la revendication 8, dans laquelle le substrat est un film plastique.
